# EUROPÄISCHE PATENTSCHRIFT

(11) **EP 1 224 509 B1**
(45) Veröffentlichungstag und Bekanntmachung des Hinweises auf die Patenterteilung: **21.04.2004**
(21) Anmeldenummer: 00983013.4
(22) Anmeldetag: 13.10.2000
(51) Int. Cl.: G05B 19/042

(54) **VERFAHREN ZUM INITIALISIEREN ODER KONFIGURIEREN EINER ELEKTRISCHEN SCHALTUNG**
METHOD FOR INITIALIZING OR CONFIGURING AN ELECTRICAL CIRCUIT
PROCEDE POUR INITIALISER OU CONFIGURER UN CIRCUIT ELECTRIQUE

(30) Priorität: 28.10.1999 DE 19952034
(43) Veröffentlichungstag der Anmeldung: 24.07.2002
(73) Patentinhaber: Infineon Technologies AG, 81669 München (DE)
(72) Erfinder: BARRENSCHEEN, Jens, 81669 München (DE); SCHMIDT, Achim, 66578 Schiffweiler (DE)
(74) Vertreter: Repkow, Ines, Dr. Dipl.-Ing.
(86) Internationale Anmeldenummer: PCT/DE2000/003630
(87) Internationale Veröffentlichungsnummer: WO 2001/031406

(56) Entgegenhaltungen:
- GB-A- 2 270 782
- US-A- 5 452 424
- US-A- 5 619 734

## Beschreibung

Die vorliegende Erfindung betrifft ein Verfahren gemäß dem oberbegriff des Patentanspruchs 1.

Elektrische Schaltungen sind vorzugsweise so aufgebaut, daß sie mit möglichst geringem Aufwand optimal an die jeweiligen Einsatzbedingungen anpaßbar sind. Die hierzu erforderliche Initialisierung oder Konfigurierung der betreffenden elektrischen Schaltung erfolgt beispielsweise dadurch, daß bestimmte Register oder Speicher der Schaltung mit vorbestimmten Daten beschrieben werden. Die in die betreffenden Register oder Speicher einzuschreibenden Daten sind dabei meistens in (vorzugsweise nichtflüchtigen) Speichereinrichtungen gespeichert.

Um die zur Initialisierung oder Konfigurierung benötigten Daten aus der diese speichernden Speichereinrichtung auszulesen und in die entsprechenden Register oder Speicher der zu initialisierenden oder zu konfigurierenden elektrischen Schaltung zu schreiben, muß innerhalb oder außerhalb der elektrischen Schaltung eine mit dieser kooperierende oder diese steuernde programmgesteuerte Einheit wie beispielsweise ein Mikroprozessor oder Mikrocontroller vorgesehen werden. Diese programmgesteuerte Einheit liest die jeweils benötigten Daten aus der diese speichernden Speichereinrichtung aus und schreibt sie in die entsprechenden Register oder Speicher der zu initialisierenden oder zu konfigurierenden elektrischen Schaltung.

Bei komplexeren Initialisierungs- oder Konfigurations-Vorgängen kann in der Speichereinrichtung auch ein Initialisierungs- oder Konfigurationsprogramm gespeichert sein, das von der programmgesteuerten Einheit ausgelesen und ausgeführt wird.

Auf diese Weise lassen sich beliebige elektrische Schaltungen individuell initialisieren und konfigurieren.

Eine wie beschrieben erfolgende Initialisierung oder Konfigurierung kann allerdings insbesondere wegen der Notwendigkeit des Vorhandenseins einer programmgesteuerten Einheit mit einem erheblichen Aufwand verbunden sein. Zwar sind initialisierbare oder konfigurierbare Schaltungen häufig Bestandteil von programmgesteuerte Einheiten enthaltenden Systemen, doch ist dies nicht immer der Fall oder es besteht keine Verbindung zwischen der programmgesteuerten Einheit und der zu initialisierenden oder zu konfigurierenden elektrischen Schaltung.

Es ist zwar auch möglich, zu initialisierende oder zu konfigurierende elektrische Schaltungen ohne eine programmgesteuerte Einheit zu initialisieren, doch ist dies auf einfache und stets gleichbleibende Initialisierungen und Konfigurierungen beschränkt.

Weitere Verfahren zum Initialisieren oder Konfigurieren einer elektrischen Schaltung sind aus der UA-A-5 619 734 und der US-A-5 452 424. Die in diesen Druckschriften beschriebenen Verfahren weisen jedoch ähnliche Probleme auf.

Der vorliegenden Erfindung liegt daher die Aufgabe zugrunde, ein Verfahren zu finden, durch welches zu initialisierende oder zu konfigurierende elektrische Schaltungen unter allen Umständen mit minimalem Aufwand beliebig initialisiert oder konfiguriert werden können.

Diese Aufgabe wird erfindungsgemäß durch durch das in Patentanspruch 1 beanspruchte Verfahren gelöst.

Dadurch kann die Initialisierung oder Konfigurierung der zu initialisierenden oder zu konfigurierenden elektrischen Schaltung ohne nennenswerten Aufwand, insbesondere ohne eine programmgesteuerte Einheit, durch diese selbst erfolgen. Die zu initialisierende oder zu konfigurierende elektrische Schaltung muß hierzu lediglich eine die Vorschrift extrahierende und ausführende Logik enthalten, und diese kann aufgrund der sehr begrenzten Anzahl und der geringen Komplexität der Vorschriften sehr einfach aufgebaut und betreibbar sein. Gegebenenfalls erforderliche Änderungen des Initialisierungs- oder Konfigurierungsablaufes und/oder der dabei zu verwendenden Daten können durch einen Austausch oder eine Umprogrammierung der Speichereinrichtung erfolgen.

Durch das neuartige Verfahren können elektrische Schaltungen unter allen Umständen mit minimalem Aufwand wunschgemäß initialisiert oder konfiguriert werden.

Vorteilhafte Weiterbildungen der Erfindung sind den Unteransprüchen, der nachfolgenden Beschreibung und den Figuren zu entnehmen.

Die Erfindung wird nachfolgend anhand eines Ausführungsbeispiels unter Bezugnahme auf die Figuren näher erläutert.
Es zeigen
- Figur 1: eine Anordnung mit einer wie nachfolgend beschrieben initialisierbaren oder konfigurierbaren elektrischen Schaltung,
- Figur 2: das Format einer Dateneinheit, unter Verwendung welcher die elektrische Schaltung initialisiert oder konfiguriert wird, und
- Figur 3: ein Initialisierungs-Steuerregister der elektrischen Schaltung.

Die elektrische Schaltung, die durch das nachfolgend näher beschriebene Verfahren initialisiert oder konfiguriert werden soll, ist im betrachteten Beispiel eine CAN(Controller-Area-Network)-Komponente. Es sei jedoch bereits an dieser Stelle darauf hingewiesen, daß hierauf keine Einschränkung besteht. Die zu initialisierende bzw. zu konfigurierende elektrische Schaltung kann auch eine beliebige andere elektrische Schaltung sein.

Die CAN-Komponente braucht im betrachteten Beispiel keine programmgesteuerte Einheit, d.h. keinen Mikroprozessor, Mikrocontroller oder dergleichen aufzuweisen, und muß auch nicht mit einer sie steuernden programmgesteuerten Einheit verbunden sein; zur Durchführung des nachfolgend näher beschriebenen Verfahrens wird keine programmgesteuerte Einheit benötigt. Obgleich sich der Einsatz des nachfolgend näher beschriebenen Verfahrens bei derartigen elektrischen Schaltungen als besonders vorteilhaft erweist, besteht auch hierauf keine Einschränkung. D.h., die elektrische Schaltung kann auch eine programmgesteuerte Einheit enthalten oder mit einer programmgesteuerten Einheit verbunden sein. Eine vorhandene programmgesteuerte Einheit muß zwar nicht, kann aber zur Initialisierung oder Konfigurierung der CAN-Komponente (mit-) benutzt werden; der hierfür zu treibende Aufwand und die Belastung der programmgesteuerten Einheit sind dabei jedoch erheblich geringer als wenn bisherige Verfahren zur Initialisierung oder Konfigurierung von elektrischen Schaltungen unter Verwendung von programmgesteuerten Einheiten ausgeführt werden.

Die initialisierung oder Konfigurierung der zu initialisierenden oder zu konfigurierenden elektrischen Schaltung erfolgt im betrachteten Beispiel unter Verwendung von in einer Speichereinrichtung gespeicherten Daten; die elektrische Schaltung liest in der Speichereinrichtung gespeicherte Daten aus und schreibt sie in vorgegebene interne Register oder sonstige Speicher der elektrischen Schaltung.

Die Speichereinrichtung ist im betrachteten Beispiel ein EEPROM. Es kann sich aber auch um eine beliebige andere nichtflüchtige oder flüchtige Speichereinrichtung wie beispielsweise ein ROM, einen Flash-Speicher, ein RAM etc. handeln.

Die Speichereinrichtung ist im betrachteten Beispiel eine für serielle Datentransfers ausgelegte Speichereinrichtung (das als Speichereinrichtung verwendete EEPROM ist ein SPI-kompatibles EEPROM; der Zugriff auf dieses EEPROM erfolgt durch eine SSC-Einheit der CAN-Komponente). Es kann sich aber auch um eine für parallele Datentransfers ausgelegte Speichereinrichtung handeln.

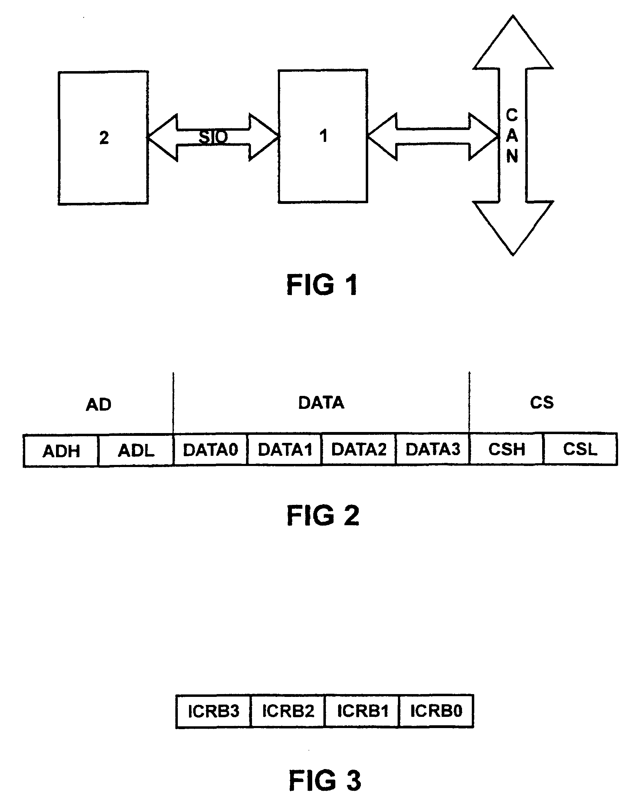

Die betrachtete Anordnung ist schematisch in Figur 1 dargestellt. Dabei sind die CAN-Komponente mit dem Bezugszeichen 1, das EEPROM mit dem Bezugszeichen 2, die serielle Datenübertragung ausgelegte Verbindung zwischen der CAN-Komponente 1 und dem EEPROM mit dem Bezugszeichen SIO, und das CAN mit dem Bezugszeichen CAN bezeichnet.

Wenn die CAN-Komponente 1 nach dem Einschalten oder im Ansprechen auf sonstige Ereignisse initialisiert oder (um-)-konfiguriert werden muß, beginnt sie, aus dem EEPROM 2 seriell Daten auszulesen.

Die aus dem EEPROM 2 ausgelesenen Daten werden in Einheiten ausgelesen und weiterverarbeitet, deren Format in Figur 2 dargestellt ist.

Wie aus der Figur 2 ersichtlich ist, besteht eine Dateneinheit aus mehreren Teilen, nämlich einem Adreß-Teil AD, einem Daten-Teil DATA, und einem Test-Teil CS.

Der Adreß-Teil AD umfaßt im betrachteten Beispiel zwei Bytes ADL und ADH und enthält
- Vorschriften für die Verwendung der im Daten-Teil DATA enthaltenen Daten (Bits 0 bis 7 von ADL und Bits 0 bis 3 von ADH); diese Vorschrift ist im betrachteten Beispiel eine Ladevorschrift für das Laden der Register oder Speicher der zu initialisierenden oder zu konfigurierenden elektrischen Schaltung mit den dafür vorgesehenen Daten; sie besteht im betrachteten Beispiel aus der Adresse des Registers oder Speichers, in welches bzw. in welchen die im Daten-Teil DATA enthaltenen Daten geschrieben werden sollen; zusätzlich oder alternativ könnte die Vorschrift aber beispielsweise auch einfache Verarbeitungen der im Daten-Teil DATA enthaltenen Daten umfassen,
- eine Angabe darüber, aus wie vielen Bytes der Daten-Teil DATA besteht (Bits 5 bis 7 von ADH), und
- eine Angabe darüber, ob der Test-Teil CS vorhanden ist (Bit 4 von ADH).

Der Daten-Teil DATA umfaßt im betrachteten Beispiel zwischen 1 und 4 Bytes; die darin gespeicherten Daten werden in das Register oder den Speicher geschrieben, der durch die im Adreß-Teil AD angegebene Adresse spezifiziert wird.

Der Test-Teil CS ist optional. Er besteht im betrachteten Beispiel aus 2 Bytes und enthält eine Check-Summe, anhand welcher bei der Datenübertragung aufgetretene Fehler in der betreffenden Dateneinheit erkennbar und gegebenenfalls korrigierbar sind.

Die CAN-Komponente 1 liest aus dem EEPROM 2 eine Dateneinheit nach der anderen aus, überprüft diese gegebenenfalls unter Verwendung des Test-Teils CS auf Richtigkeit, und schreibt die darin (die im Daten-Teil DATA) enthalten Konfigurationsdaten in die internen Register oder Speicher, die im Adreß-Teil AD spezifiziert sind.

Die Decodierung der Adresse und das Einschreiben von Daten an die durch die Adresse spezifizierte Stelle innerhalb der CAN-Komponente 1 erfordert nur eine äußerst einfache Logik, die sich in zu initialisierende oder zu konfigurierende elektrische Schaltungen mit minimalem Aufwand problemlos integrieren läßt.

Dadurch ist es im Gegensatz zu bisher nicht mehr erforderlich, die Initialisierung oder Konfigurierung einer zu initialisierenden oder zu konfigurierenden elektrischen Schaltung unter Verwendung einer programmgesteuerten Einheit wie etwa eines Mikroprozessors oder Mikrocontrollers erfolgen zu lassen; die zu initialisierende oder zu konfigurierende elektrische Schaltung kann sich problemlos selbst initialisieren oder konfigurieren.

Falls eine Veränderung der Daten, mit denen die Register oder Speicher der elektrischen Schaltung zu belegen sind, und/oder der Reihenfolge, in der dies geschehen soll, erforderlich ist, muß lediglich das EEPROM 2 umprogrammiert oder ausgetauscht werden; an der zu initialisierenden oder zu konfigurierenden Schaltung sind keine Eingriffe erforderlich.

Eine wie beschrieben erfolgende Initialisierung oder Konfigurierung der CAN-Komponente 1 kann auch komplexere Vorgänge umfassen. Insbesondere in solchen Fällen erweist es sich als vorteilhaft, wenn die CAN-Komponente 1 über ein die Initialisierung oder Konfigurierung steuerndes Initialisierungs-Steuerregister verfügt. Ein Ausführungsbeispiel eines solchen, vorzugsweise ebenfalls mit aus dem EEPROM ausgelesenen Daten beschreibbaren Registers ist in Figur 3 gezeigt.

Das Initialisierungs-Steuerregister besteht im betrachteten Beispiel aus vier Bytes (ICRBO, ICRB1, ICRB2, ICRB3) und enthält
- die Adresse, unter Verwendung welcher die die Konfigurationsdaten enthaltende Speichereinrichtung (im betrachteten Beispiel das EEPROM 2) zu adressieren ist (IRCBO und IRCB1),
- ein der Speichereinrichtung zu übermittelndes Instruktionswort (IRCB2), und
- verschiedene Steuerinformationen insbesondere zum Ablauf der Initialisierung oder Konfigurierung (IRCB3),
wobei die Steuerinformationen im betrachteten Beispiel vorgeben,
- ob die Initialisierungsphase zu beenden ist,
- ob die Initialisierung durch einen unter Verwendung der in IRCBO-IRCB2 enthaltenen Daten erfolgenden Zugriff auf die Speichereinrichtung fortzusetzen ist, und
- ob die Register der SSC-Einheit (beispielsweise mit den Inhalten von ICRBO bis ICRB2) neu zu beschreiben sind.

Es dürfte einleuchten, daß das Initialisierungs-Steuerregister mannigfaltige weitere Informationen und Anweisungen für die Initialisierung oder die Konfigurierung enthalten kann. Da das Initialisierungs-Steuerregister durch die in der Speichereinrichtung gespeicherten Daten beschreibbar ist, kann der Ablauf der Initialisierung oder Konfigurierung ohne Ausführung eines Programms, also denkbar einfach, aber dennoch vollkommen flexibel festgelegt werden.

Die vorstehend beschriebene Art der Initialisierung oder Konfigurierung von elektrischen Schaltungen kann, wie vorstehend bereits erwähnt wurde, ohne Verwendung einer programmgesteuerten Einheit erfolgen; zur Durchführung genügt im allgemeinen eine vergleichsweise einfach aufgebaute Logik, beispielsweise eine sogenannte state machine. Dies gilt auch für komplexe und/oder sehr umfangreiche Initialisierungs- oder Konfigurierungsvorgänge. Dabei ist es sogar ohne größeren Aufwand möglich, den Ablauf der Initialisierung oder Konfigurierung von bestimmten Ereignissen oder Zuständen innerhalb oder außerhalb der zu initialisierenden oder zu konfigurierenden elektrischen Schaltung (beispielsweise vom Pegel eines der Schaltung zugeführten Signals) abhängig zu machen.

Unabhängig davon können - ohne eine spezielle Anpassung des Aufbaus und/oder des Betriebs der zu initialisierenden oder zu konfigurierenden elektrischen Schaltung oder sonstiger Systemkomponenten - beliebig große und/oder beliebig organisierte Speichereinrichtungen zum Speichern der zum Initialisieren oder Konfigurieren benötigten Daten zum Einsatz kommen. Gegebenenfalls zu beachtende Besonderheiten der verwendeten Speichereinrichtung können durch zu Beginn der Initialisierung oder Konfigurierung und/oder durch vor dem Auftreten der Besonderheiten erfolgende Einträge in das Initialisierungs-Steuerregister berücksichtigt werden.

Im vorliegenden Fall, wo die zu initialisierende oder zu konfigurierende Schaltung eine Netzwerk-Komponente ist, kann vorgesehen werden, daß auf die vorstehend beschriebene Art und Weise "nur" die zur Inbetriebnahme notwendige Grundkonfiguration der elektrischen Schaltung vorgenommen wird, und daß die Netzwerk-Komponente im Anschluß daran über das Netzwerk (im betrachteten Beispiel: über das CAN) weiterkonfiguriert wird.

Auf die beschriebene Art und Weise können elektrische Schaltungen unter allen Umständen mit minimalem Aufwand optimal an die gegebenen Verhältnisse oder Bedürfnisse angepaßt werden.

### Bezugszeichenliste:

- 1: CAN-Komponente
- 2: EEPROM

- AD: Adreß-Teil einer aus 2 ausgelesenen Dateneinheit
- ADx: Bytes von AD
- CAN: Controller Area Network
- CS: Test-Teil einer aus 2 ausgelesenen Dateneinheit
- CSx: Bytes von CS
- DATA: Daten-Teil einer aus 2 ausgelesenen Dateneinheit
- DATAx: Bytes von DATA
- SIO: Verbindung zwischen 1 und 2

## Patentansprüche

1. Verfahren zum Initialisieren oder Konfigurieren einer elektrischen Schaltung (1) unter Verwendung von in einer Speichereinrichtung (2) gespeicherten Daten, wobei von aus der Speichereinrichtung (2) ausgelesenen Dateneinheiten (ADH, ADL, DATAO-DATA3, CSH, CSL) jeweils in einem ersten Dateneinheits-Teil (ADH, ADL) enthaltene Daten als Vorschrift für die Verwendung von in einem zweiten Dateneinheits-Teil (DATAO-DATA3) enthaltenen Daten verwendet werden,
**dadurch gekennzeichnet,**
**daß** die Initialisierung oder Konfigurierung der elektrischen Schaltung (1) in Abhängigkeit vom Inhalt eines in der elektrischen Schaltung enthaltenen Initialisierungs-Steuerregisters (ICRBO-ICRB3) durchgeführt wird, und daß das Initialisierungs-Steuerregister (ICRBO-ICRB3) während der Initialisierung der elektrischen Schaltung (1) einmal oder öfter mit aus der Speichereinrichtung (2) ausgelesenen Daten beschrieben werden kann..

2. Verfahren nach Anspruch 1,
**dadurch gekennzeichnet,**
**daß** die im zweiten Dateneinheits-Teil (DATAO-DATA3) enthaltenen Daten in in der elektrischen Schaltung (1) enthaltene Register oder Speicher geschrieben werden.

3. Verfahren nach Anspruch 2,
**dadurch gekennzeichnet,**
**daß** die Festlegung des Registers oder Speichers, in welches bzw. in welchen die im zweiten Dateneinheits-Teil (DATAO-DATA3) enthaltenen Daten geschrieben werden sollen, unter Berücksichtigung der im ersten Dateneinheits-Teil (ADH, ADL) enthaltenen Daten erfolgt.

4. Verfahren nach Anspruch 3,
**dadurch gekennzeichnet,**
**daß** die im ersten Dateneinheits-Teil (ADH, ADL) enthaltenen Daten als eine das zu beschreibende Register oder den zu beschreibenden Speicher bezeichnende Adresse verwendet werden.

5. Verfahren nach einem der vorhergehenden Ansprüche,
**dadurch gekennzeichnet,**
**daß** die verwendete Dateneinheit (ADH, ADL, DATAO-DATA3, CSH, CSL) eine variable Länge aufweist, so daß aufeinanderfolgend ausgelesene Dateneinheiten unterschiedlich lang sein können.

6. Verfahren nach Anspruch 5,
**dadurch gekennzeichnet,**
**daß** die Länge des zweiten Dateneinheits-Teils (DATAO-DATA3) insbesondere in Abhängigkeit vom zu beschreibenden Register oder Speicher variieren kann.

7. Verfahren nach Anspruch 5 oder 6,
**dadurch gekennzeichnet,**
**daß** in der verwendeten Dateneinheit (ADH, ADL, DATAO-DATA3, CSH, CSL) Informationen über die Länge der jeweiligen Dateneinheit enthalten sind.

8. Verfahren nach einem der vorhergehenden Ansprüche,
**dadurch gekennzeichnet,**
**daß** die verwendete Dateneinheit (ADH, ADL, DATAO-DATA3, CSH, CSL) einen dritten Dateneinheits-Teil (CSH, CSL) mit Prüfdaten enthält, anhand welcher Übertragungsfehler erkennbar und/oder korrigierbar sind.

9. Verfahren nach Anspruch 8,
**dadurch gekennzeichnet,**
**daß** in der verwendeten Dateneinheit (ADH, ADL, DATAO-DATA3, CSH, CSL) Informationen darüber enthalten sind, ob die jeweilige Dateneinheit einen Prüfdaten enthaltenden Dateneinheits-Teil (CSH, CSL) aufweist oder nicht.

## Claims

1. Method for initializing or configuring an electrical circuit (1) using data stored in a memory device (2), wherein, from data units (ADH, ADL, DATAO-DATA3, CSH, CSL) read from the memory device (2), data respectively contained in a first data unit part (ADH, ADL) are used as a specification for the use of data contained in a second data unit part (DATAO-DATA3),
**characterized**
**in that** the initialization or configuration of the electrical circuit (1) is carried out in a manner dependent on the content of an initialization control register (ICRBO-ICRB3) contained in the electrical circuit, and in that during the initialization of the electrical circuit (1), data read from the memory device (2) can be written once or more often to the initialization control register (ICRB0-ICRB3).

2. Method according to Claim 1,
**characterized**
**in that** the data contained in the second data unit part (DATAO-DATA3) are written to memories or registers contained in the electrical circuit (1).

3. Method according to Claim 2,
**characterized**
**in that** the register or memory to which the data contained in the second data unit part (DATAO-DATA3) are to be written is defined taking account of the data contained in the first data unit part (ADH, ADL).

4. Method according to Claim 3,
**characterized**
**in that** the data contained in the first data unit part (ADH, ADL) are used as an address which designates the register to be written to or the memory to be written to.

5. Method according to one of the preceding claims,
**characterized**
**in that** the data unit (ADH, ADL, DATAO-DATA3, CSH, CSL) used has a variable length, so that data units which are read out successively may have different lengths.

6. Method according to Claim 5,
**characterized**
**in that** the length of the second data unit part (DATAO-DATA3) may vary in particular in a manner dependent on the register or memory which is to be written to.

7. Method according to Claim 5 or 6,
**characterized**
**in that** the data unit (ADH, ADL, DATAO-DATA3, CSH, CSL) used contains information about the length of the respective data unit.

8. Method according to one of the preceding claims,
**characterized**
**in that** the data unit (ADH, ADL, DATAO-DATA3, CSH, CSL) used contains a third data unit part (CSH, CSL) with test data that can be used to detect and/or correct transmission errors.

9. Method according to Claim 8,
**characterized**
**in that** the data unit (ADH, ADL, DATAO-DATA3, CSH, CSL) used contains information about whether or not the respective data unit has a data unit part (CSH, CSL) containing test data.

## Revendications

1. Procédé d'initialisation ou de configuration d'un circuit électrique (1) en utilisant des données sauvegardées dans un dispositif de mémoire (2), les unités de données (ADH, ADL, DATA0 à DATA3, CSH, CSL) lues dans le dispositif de mémoire (2) étant respectivement utilisées dans une première partie d'unité de données (ADH, ADL) en tant qu'instruction pour l'utilisation de données contenues dans une deuxième partie d'unité de données (DATAO à DATA3), **caractérisé en ce que** l'initialisation ou la configuration du circuit électrique (1) est réalisée en fonction du contenu d'un registre de commande d'initialisation (ICRBO à ICRB3) contenu dans le circuit électrique, et que dans le registre de commande d'initialisation (ICRBO à ICRB3), pendant l'initialisation du circuit électrique (1), peuvent être inscrites une fois ou plus souvent les données lues dans le dispositif de mémoire (2).

2. Procédé selon la revendication 1, **caractérisé en ce que** les données contenues dans la deuxième partie d'unité de données (DATAO à DATA3) sont inscrites dans des registres ou mémoires contenus dans le circuit électrique (1).

3. Procédé selon la revendication 2, **caractérisé en ce que** la détermination du registre ou de la mémoire dans laquelle ou dans lequel les données contenues dans la deuxième partie d'unité de données (DATAO à DATA3) doivent être inscrites a lieu en tenant compte des données contenues dans la première partie d'unité de données (ADH, ADL).

4. Procédé selon la revendication 3, **caractérisé en ce que** les données contenues dans la première partie d'unité de données (ADH, ADL) sont utilisées en tant qu'adresse désignant le registre devant recevoir les inscriptions ou la mémoire devant recevoir les inscriptions.

5. Procédé selon l'une quelconque des revendications précédentes, **caractérisé en ce que** l'unité de données utilisée (ADH, ADL, DATA0 à DATA3, CSH, CSL) présente une longueur variable, de sorte que les unités de données lues successivement peuvent être de longueurs différentes.

6. Procédé selon la revendication 5, **caractérisé en ce que** la longueur de la deuxième partie d'unité de données (DATAO à DATA3) peut varier notamment en fonction du registre ou de la mémoire devant recevoir les inscriptions.

7. Procédé selon la revendication 5 ou 6, **caractérisé en ce que** des informations sur la longueur de l'unité de données respective sont contenues dans l'unité de données utilisée (ADH, ADL, DATA0 à DATA3, CSH, CSL).

8. Procédé selon l'une quelconque des revendications précédentes, **caractérisé en ce que** l'unité de données utilisée (ADH, ADL, DATA0 à DATA3, CSH, CSL) contient une troisième partie d'unité de données (CSH, CSL) comportant des données de contrôle, à l'aide desquelles on peut détecter et/ou corriger des erreurs de transmission.

9. Procédé selon la revendication 8, **caractérisé en ce que** dans l'unité de données utilisée (ADH, ADL, DATA0 à DATA3, CSH, CSL) sont contenues des informations indiquant si l'unité de données respective présente ou non une partie d'unité de données (CSH, CSL) contenant des données de contrôle.
